# EUROPEAN PATENT APPLICATION

(11) **EP 1 947 124 A2**
(43) Date of publication of application: **23.07.2008**
(21) Application number: 08250220.4
(22) Date of filing: 17.01.2008
(51) Int. Cl.: C08F 8/42

(54) **Coating compositions, their preparation and use and articles and materials coated therewith**

(30) Priority: 17.01.2007 JP 2007007675
(71) Applicant: Shin-Etsu Chemical Co., Ltd., Tokyo (JP)
(72) Inventor: Tsuchida, Kazuhiro, Silicone-Elec. Mat. Res. Cnt., Annaka-shi Gunma-ken (JP); Yamaya, Masaaki, Silicone-Elec. Mat. Res. Cnt., Annaka-shi Gunma-ken (JP)
(74) Representative: Stoner, Gerard Patrick

(57) **Abstract**

A coating composition is based on a water-soluble silicon-containing polymer containing a silyl group capable of reaction with an inorganic material to form a chemical bond and a plurality of amino groups capable of reaction with an organic resin to form chemical bonds. This coating composition has a water solubility and adhesion to inorganic materials and organic resins, and serves as a primer or modifier for improving many properties including mechanical strength, water and boiling water resistance and weatherability.

## Description

This invention relates to coating compositions based on water-soluble silicon-containing polymers, a method for preparing the same, and articles coated or surface treated therewith. More particularly, it relates to coating compositions based on water-soluble silicon-containing polymers containing a plurality of primary amino groups and a hydrolysable silyl group and useful as a primer or modifier (for composites) with improved properties, a method for preparing the same, and articles coated or surface treated therewith.

### BACKGROUND

In the prior art, composite materials are prepared by treating glass fiber preforms such as glass cloth, glass tape, glass mat, and glass paper and mica preforms serving as an inorganic reinforcement with organic resins such as epoxy resins, phenolic resins, polyimide resins and unsaturated polyester resins. These composite materials find use in a wide variety of applications.

Laminates are often made of such composite materials. It is desired to improve the mechanical strength, electrical properties, water resistance, boiling water resistance, chemical resistance, and weatherability of such laminates. It was proposed to pretreat the inorganic reinforcements with silane coupling agents such as γ-aminopropyltriethoxysilane, β-aminoethyl-γ-aminopropyltrimethoxysilane, and γ-glycidoxypropyltrimethoxysilane, prior to the treatment with organic resins. This pretreatment enhances the adhesion of resins to the inorganic reinforcements.

Among others, those composite materials using phenolic resins as the organic resin have excellent heat resistance, dimensional stability and moldability and have long been used as the molding material in the basic industrial fields including automobiles, electric and electronic equipment. Under the recent trend aiming at reduced cost and weight, active attempts have been made to replace metal parts by high-strength molded parts of glass fiber-reinforced phenolic resins. In order to promote metal replacement in the future, the key is to achieve a high strength which has never been reached by prior art glass fiber-reinforced phenolic resin moldings. To achieve a high strength, many techniques of treating glass fibers with amino-silane coupling agents to enhance the adhesion to the matrix resin have been proposed. The treatment with coupling agents alone, however, encounters certain limits in enhancing strength. Under the circumstances, several techniques have been proposed for further improving the adhesion between glass fibers and matrix resins.

JP-A 52-12278 discloses that glass fibers to be admixed with a thermosetting resin are pretreated by applying a primer resin compatible with the thermosetting resin or a mixture of the primer resin and another primer agent such as a silane coupling agent closely to surfaces of glass fibers. It is described that high strength is achieved by dispersing the pretreated fibers in the thermosetting resin. This technique, however, exerts a rather little effect of enhancing the strength of molding material and is uneconomical because autoclave treatment is necessary at the stage when glass fibers are pretreated. For a diallyl phthalate polymer matrix, glass fibers pretreated with a diallyl phthalate polymer and a silane coupling agent are used. The disclosure thus refers to only the strength enhancement effect due to reaction and interaction between these diallyl phthalate resins, but nowhere to phenolic resin molding materials.

JP-A 10-7883 discloses a technique of producing a phenolic resin composition with improved rotational rupture strength by first sizing glass fibers with a phenolic resin of the same type as a matrix phenolic resin, then treating them with a coupling agent, and incorporating the treated glass fibers in a phenolic resin composition. With this technique, however, surfaces of glass fibers are directly treated with the phenolic resin. Since the phenolic resin generally has weak chemical bonding forces with glass fibers, a firm adhesion is not available between the fibers and the matrix resin. This technique is thus less effective in enhancing the strength of molding material.

In connection with the above technique, JP-A 2001-270974 discloses a technique of improving the mechanical strength of a phenolic resin composition at normal and elevated temperatures by treating glass fibers with a phenolic resin of the same type as a matrix phenolic resin and an amino-silane coupling agent at the same time, or treating with an amino-silane coupling agent and then with a phenolic resin of the same type as a matrix phenolic resin, and incorporating the treated fibers in a phenolic resin composition. The amino-silane coupling agent used herein has one or two primary amino and secondary amino groups per hydrolyzable silyl group. The degree of bond between the coupling agent with which glass fibers are treated and the phenolic resin is not sufficient. Then the coupling agent is regarded to be a factor of reducing the strength of the resin composition.

An object of the invention is to provide a coating composition featuring a high water solubility and good adhesion to inorganic materials and organic resins, and serving as a primer or modifier for improving many properties including mechanical strength, water and boiling water resistance and weatherability, a method for preparing the composition, and an article coated or surface treated with the composition.

The inventor has found that when a coating composition based on a water-soluble silicon-containing polymer containing silyl group capable of reaction with an inorganic material to form a chemical bond and a plurality of amino groups capable of reaction with an organic resin to form chemical bonds is used as a primer or modifier for composites, an increased number of reaction sites with an organic resin are available as compared with prior art amino-silane coupling agents, which facilitate to increase a bond strength to the organic resin, enabling improved adhesion.

In a first aspect, the invention provides a coating composition comprising or consisting essentially of a water-soluble silicon-containing polymer comprising recurring units having the general formula (1): 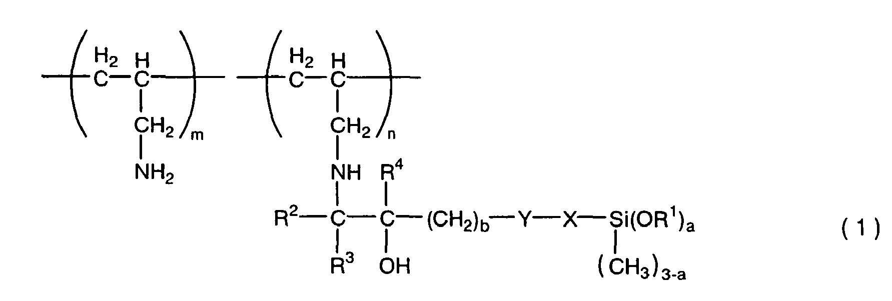 wherein m is a number from 10 to 260, n is a number from 1 to 100, R¹ is hydrogen, a C₁-C₄ alkyl group or acetyl group, and "a" and "b" each are an integer of 1 to 3, X is a C₁-C₁₀ alkylene chain which may be substituted with a C₁-C₆ alkyl group, Y is a single bond, oxygen atom or CHR⁵ group, R², R³, R⁴ and R⁵ each are hydrogen or a C₁-C₆ alkyl group, R³ or R⁴ may bond with R⁵ to form a saturated carbon ring, said polymer having a plurality of primary amino groups and a hydrolyzable silyl or silanol group or both, and an organic solvent or water or both.

In a second aspect, the invention provides a method for preparing a coating composition comprising a water-soluble silicon-containing polymer comprising recurring units having formula (1) and containing a plurality of primary amino groups and a hydrolyzable silyl or silanol group or both, and an alcohol or water or both, the method comprising the step of reacting a water-soluble primary amino group-containing polymer having the general formula (3): 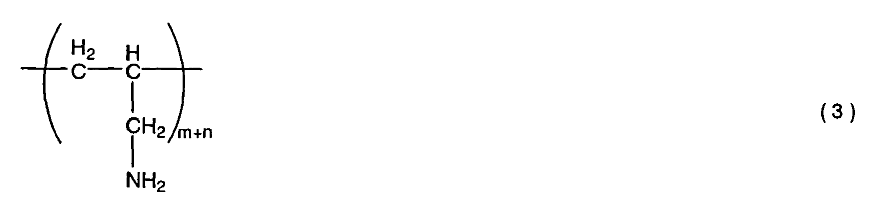 wherein m and n are as defined above, with an epoxy group-containing silicon compound having the general formula (2): 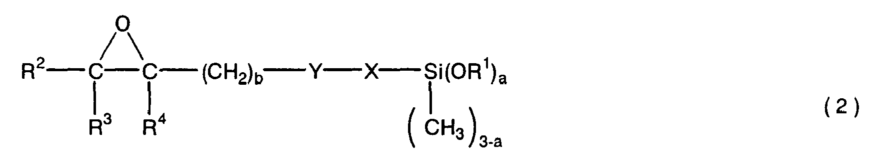 wherein R¹ to R⁴, a, b, X, and Y are as defined above, in an alcohol and/or water.

In preferred embodiments of the first and second aspects, m and n in formula (1) are numbers in the range: 0.003 ≤ n/(m+n) ≤ 0.9. The water-soluble silicon-containing polymer preferably has a weight average molecular weight of 300 to 3,000.

In a third aspect, the invention provides an article comprising a substrate which is coated or surface treated with the coating composition of the first aspect. The substrate is typically a glass fiber item selected from among glass cloth, glass tape, glass mat, and glass paper, an inorganic filler, a ceramic, or a metal.

The use of such a composition for surface treating such materials, especially as a precursor to the forming of components thereof with organic resins, is a further aspect.

### BENEFITS

The composition of the invention is based on a water-soluble silicon-containing polymer containing a plurality of primary amino groups and hydrolysable silyl group in its molecule. The polymer offers an increased number of reactive sites with organic resins and gives strong bonding forces thereto, as compared with prior art amino-silane coupling agents. The composition then develops improved adhesion when it is used as a primer and specifically as a modifier for composite materials.

### FURTHER EXPLANATION; OPTIONS AND PREFERENCES

The notation (Cn-Cm) means a group containing from n to m carbon atoms per group. The term "polymer" typically refers to high-molecular-weight compounds.

A coating composition of the invention is based on a water-soluble silicon-containing polymer having the general formula (1).

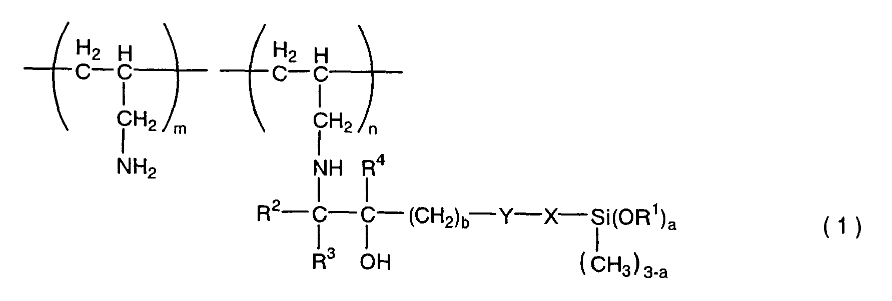

Herein m is at least 10, e.g. from 10 to 260, n is from 1 to 100, R¹ is a hydrogen atom, a C₁-C₄ alkyl group or an acetyl group, and "a" and "b" each are an integer of 1 to 3, X is a C₁-C₁₀ alkylene chain which may be substituted with a C₁-C₆ alkyl group, and Y is a single bond, an oxygen atom or a CHR⁵ group. R², R³, R⁴ and R⁵ each are a hydrogen atom or a C₁-C₆ alkyl group. R³ or R⁴ may bond with R⁵ to form a saturated carbon ring.

In formula (1), R¹ is a hydrogen atom, a C₁-C₄ alkyl group such as methyl, ethyl, n-propyl, i-propyl, n-butyl, i-butyl, or t-butyl, or acetyl group. Each of R² to R⁵ is a hydrogen atom or a C₁-C₆ alkyl group such as methyl, ethyl, n-propyl, i-propyl, n-butyl, i-butyl, t-butyl, pentyl, isopentyl or hexyl. R³ or R⁴ may bond with R⁵ to form a saturated carbon ring such as cyclopentyl or cyclohexyl.

X is selected from straight, branched or cyclic C₁-C₁₀ alkylene chains, which are optionally substituted, such as methylene, ethylene, propylene, butylene, pentylene, hexylene, heptylene, octylene, nonylene, 1,4-cyclohexylene, 1,2-cyclohexylene, 1,3-cyclopentylene, 1,4-cyclooctylene, and 1,4-cyclohexanedimethylene. When substituted, the substituent groups are C₁-C₆ alkyl groups, such as methyl, ethyl, n-propyl, i-propyl, n-butyl, i-butyl, t-butyl, pentyl, isopentyl, and hexyl.

The subscripts m and n are numbers in the range: 10 ≤ m ≤ 260 and 1 ≤ n ≤ 100, preferably 10 ≤ m ≤ 100 and 1 ≤ n ≤ 80, and more preferably 10 ≤ m s 75 and 1 ≤ n ≤ 50. Also preferably m and n satisfy the range: 0.003 ≤ n/(m+n) ≤ 0.9, and more preferably 0.06 ≤ n/(m+n) ≤ 0.5. The inclusion of a plurality of amino groups per silyl group is preferred.

The water-soluble silicon-containing polymer has a plurality of primary amino groups, and is present in such a state that some amino groups within its molecular structure have reacted with a silane coupling agent to form bonds. Specifically, in an embodiment wherein a silane coupling agent having an epoxy group is used, the epoxy group undergoes ring opening to form a structure being bonded to the nitrogen atom of an amino group. The aforementioned reaction of an amino group with a silane coupling agent may be carried out either prior to or subsequent to polymer formation. Namely, by reacting a water-soluble polymer having a plurality of primary amino groups with a silane coupling agent, a hydrolyzable silyl group may be introduced into that polymer. Alternatively, a water-soluble polymer having a hydrolyzable silyl group introduced therein may be obtained by reacting an amino compound having a primary amino group with a silane coupling agent, then effecting polymerization or polycondensation reaction.

While the silane coupling agent capable of reacting with a primary amino group to form a bond is used for introducing a hydrolyzable silyl group into the water-soluble silicon-containing polymer according to the invention, exemplary silane coupling agents include epoxy-bearing silicon compounds having the general formula (2). 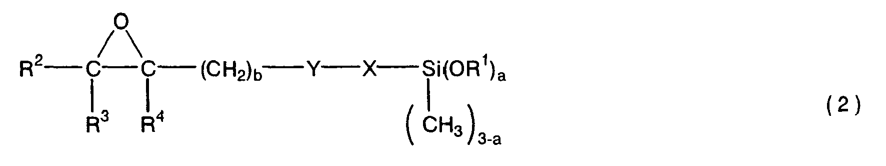 Note that R¹ to R⁴, X, Y, a and b are as defined above.

Examples of suitable silicon compounds include, but are not limited to, glycidoxymethyltrimethoxysilane, glycidoxymethylmethyldimethoxysilane, glycidoxymethyldimethylmethoxysilane, glycidoxymethyltriethoxysilane, glycidoxymethylmethyldiethoxysilane, glycidoxymethyldimethylethoxysilane, 3-glycidoxy-2-methylpropyltrimethoxysilane, 3-glycidoxy-2-methylpropylmethyldimethoxysilane, 3-glycidoxy-2-methylpropyldimethylmethoxysilane, 3-glycidoxy-2-methylpropyltriethoxysilane, 3-glycidoxy-2-methylpropylmethyldiethoxysilane, 3-glycidoxy-2-methylpropyldimethylethoxysilane, and 2-(3,4-epoxycyclohexyl)ethyltrimethoxysilane. These silicon compounds may be used alone or in admixture.

The water-soluble polymer having primary amino groups which is a precursor resin to the water-soluble silicon-containing polymer includes polyallylamine obtained by homopolymerisation of an allylamine (polymerisable monomer with primary amino group).

The polymer may consist of or consist essentially of the m and n units, or, other monomer(s), e.g. vinyl monomer(s) may be copolymerised insofar as this does not spoil the solubility; this is easily assessed and controlled.

Preferred is a water-soluble polymer having primary amino groups represented by the general formula (3): 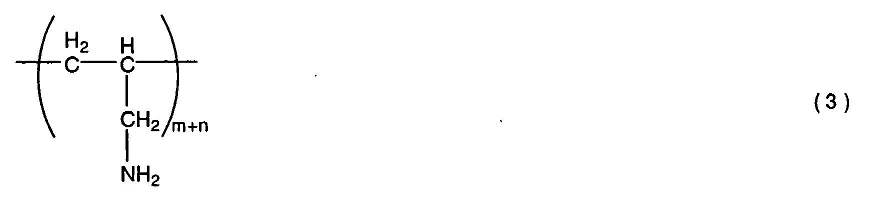 wherein m and n are as defined above.

In a preferred embodiment, a water-soluble polymer having primary amino groups represented by formula (3) is reacted with an epoxy-containing silicon compound of formula (2) in an alcohol and/or water.

Examples of the alcohol used herein include lower alcohols of 1 to 4 carbon atoms, such as methanol, ethanol, isopropanol, and butanol, with methanol and ethanol being preferred. The alcohol and/or water is preferably used in such amounts that the reaction mixture has a nonvolatile concentration of 20 to 50% by weight. Where alcohol and water are used in admixture, the preferred mixture contains 1 part by weight of water and 7 to 9 parts by weight of alcohol.

Referring back to formula (1), the subscripts m and n stand for the number of allylamine units and the number of units resulting from reaction of allylamine with silane in the molecule, respectively. A ratio of m to n represents a ratio of primary amino groups to silyl groups in the molecule. If 260 < m or 100 < n, which indicates a higher molecular weight, then such a polymer cannot be manufactured consistently because it reaches a very high viscosity at the synthesis stage. If m < 10, and especially m = 0, then acceptable water solubility is not available. If n < 1, then a polymer lacks adhesion to inorganic materials.

Whatever is the silane coupling agent to be reacted with the polyallylamine precursor resin, the water-soluble silicon-containing polymer should preferably satisfy the range: 0.003 ≤ n/(m+n) ≤ 0.9, and more preferably 0.06 ≤ n/(m+n) ≤ 0.5 wherein n/(m+n) represents a ratio of the quantity (n) of silyl groups introduced to the quantity (m) of residual amino groups. If n/(m+n) is smaller than the range, then a polymer may lack adhesion to inorganic materials. If n/(m+n) is larger than the range, then a polymer may lack water solubility. It is then recommended that the polymer of formula (3) and the silicon compound of formula (2) be selected and used so that m and n may satisfy the above range.

The reaction temperature is generally up to 100°C, and preferably 25°C to 70°C. The reaction time, which may vary over a wide range, is generally 1 to 100 hours, and preferably 2 to 50 hours.

Preferably, the water-soluble silicon-containing polymer has a weight average molecular weight (Mw) of 300 to 3,000, and more preferably 1,000 to 2,000, as determined by gel permeation chromatography (GPC) versus polystyrene standards. If Mw is greater than 3,000, then a polymer may be prone to gel and thus be difficult to manufacture and hold in shelf. If Mw is less than 300, then polymer synthesis is difficult because of uncontrollable polymerization.

The coating composition further contains an organic solvent or water or both. Typically, the coating composition contains from 10 to 95%, and preferably 20 to 90% by weight of the solvent and/or water, the balance being the silicon-containing polymer. Preferred solvents are lower alcohols such as methanol and ethanol

Since the coating composition is based on the water-soluble silicon-containing polymer having silyl groups capable of reaction with an inorganic material to form chemical bonds and amino groups capable of reaction with an organic resin to form chemical bonds, it is advantageously used as a primer, or a modifier for a composite material having an inorganic material combined with an organic resin.

The substrates to be coated or surface treated with the coating composition of the invention include inorganic materials which are generally reactive with hydrolyzable silyl groups to form bonds and organic resins which are generally reactive with amino groups to form bonds. The shape of substrates is not particularly limited. Typical examples of inorganic materials include inorganic fillers such as silica, glass fibers and fiber glass items such as glass cloth, glass tape, glass mat and glass paper, ceramics, and metal substrates such as iron, aluminum, copper, silver, gold, and magnesium. Typical examples of organic resins include epoxy resins, phenolic resins, polyimide resins, and unsaturated polyester resins. The substrates are not limited to the illustrated examples.

The technique of coating or surface treating substrates with the coating composition of the invention is not particularly limited. Typical coating or surface treating techniques are flow coating, dipping, and spin coating. The conditions of subsequent curing are not particularly limited. Typical curing conditions include heating and drying. After treatment, the coating is preferably heated and dried at 60 to 180°C, preferably 80 to 150°C for 5 minutes to 2 hours, to facilitate simultaneously removal of the solvent and chemical reaction of the base polymer in the coating composition with the substrate surface.

### EXAMPLE

Examples of the invention are given below by way of illustration and not by way of limitation. All parts are by weight. In Examples, pH is a measurement at 25°C. The viscosity is measured at 25°C by a Brookfield rotational viscometer. The abbreviation GC is gas chromatography, NMR is nuclear magnetic resonance spectroscopy, and Mw is a weight average molecular weight as determined by gel permeation chromatography (GPC) versus polystyrene standards.

### Example 1

Solvent exchange was carried out on 500.0 parts of a 15 wt% aqueous solution of polyallylamine (Nitto Boseki Co., Ltd, PAA-01, Mw = 1000) by removing water under reduced pressure and adding methanol instead. It turned to a 15 wt% methanol solution. The solution, to which 77.9 parts (0.33 mole) of 3-glycidoxypropyltrimethoxysilane was added, was stirred at 60-70°C for 5 hours. With the progress of reaction, the reactant, 3-glycidoxypropyltrimethoxysilane was consumed. The reaction solution was then analyzed by GC, but no peaks of the reactant, 3-glycidoxypropyltrimethoxysilane were detected. On NMR analysis of silicon, there were observed no signals of 3-glycidoxypropyltrimethoxysilane and instead, signals probably attributable to a target compound were observed. The completion of reaction was identified by these measurements. The solution was diluted with methanol to a concentration of 15% by weight of the active ingredient, obtaining a primer composition. This composition was a clear yellow solution which was quickly miscible with water and had pH 11.7 and a viscosity of 2.7 mPa-s. The base polymer portion had a degree of polymerization of about 17 and the following average structural formula.

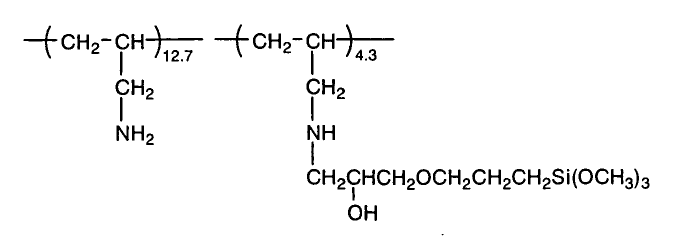

### Example 2

Solvent exchange was carried out on 500.0 parts of a 15 wt% aqueous solution of polyallylamine (Nitto Boseki Co., Ltd, PAA-01, Mw = 1000) by removing water under reduced pressure and adding methanol instead. It turned to a 15 wt% methanol solution. The solution, to which 40.1 parts (0.17 mole) of 3-glycidoxypropyltrimethoxysilane was added, was stirred at 60-70°C for 5 hours. With the progress of reaction, the reactant, 3-glycidoxypropyltrimethoxysilane was consumed. The reaction solution was then analyzed by GC, but no peaks of the reactant, 3-glycidoxypropyltrimethoxysilane were detected. On NMR analysis of silicon, there were observed no signals of 3-glycidoxypropyltrimethoxysilane and instead, signals probably attributable to a target compound were observed. The completion of reaction was identified by these measurements. The solution was diluted with methanol to a concentration of 15% by weight of the active ingredient, obtaining a primer composition. This composition was a clear yellow solution which was quickly miscible with water and had pH 11.4 and a viscosity of 2.1 mPa-s. The base polymer portion had a degree of polymerization of about 17 and the following average structural formula.

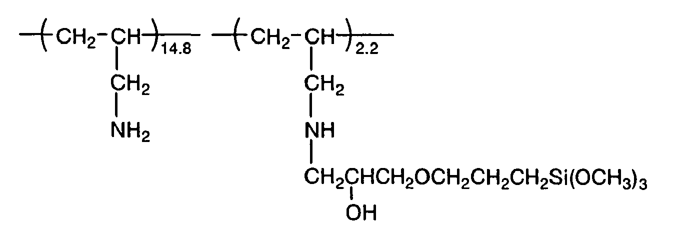

### Example 3

Solvent exchange was carried out on 500.0 parts of a 20 wt% aqueous solution of polyallylamine (Mw = 700) by removing water under reduced pressure and adding methanol instead. It turned to a 15 wt% methanol solution. The solution, to which 96.8 parts (0.42 mole) of 3-glycidoxypropyltrimethoxysilane was added, was stirred at 60-70°C for 5 hours. With the progress of reaction, the reactant, 3-glycidoxypropyltrimethoxysilane was consumed. The reaction solution was then analyzed by GC, but no peaks of the reactant, 3-glycidoxypropyltrimethoxysilane were detected. On NMR analysis of silicon, there were observed no signals of 3-glycidoxypropyltrimethoxysilane and instead, signals probably attributable to a target compound were observed. The completion of reaction was identified by these measurements. The solution was diluted with methanol to a concentration of 15% by weight of the active ingredient, obtaining a primer composition. This composition was a clear yellow solution which was quickly miscible with water and had pH 11.8 and a viscosity of 2.3 mPa-s. The base polymer portion had a degree of polymerization of about 12 and the following average structural formula.

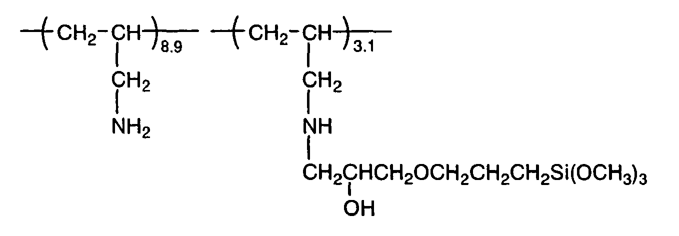

### Example 4

Solvent exchange was carried out on 500.0 parts of a 20 wt% aqueous solution of polyallylamine (Mw = 2500) by removing water under reduced pressure and adding methanol instead. It turned to a 15 wt% methanol solution. The solution, to which 96.8 parts (0.42 mole) of 3-glycidoxypropyltrimethoxysilane was added, was stirred at 60-70°C for 5 hours. With the progress of reaction, the reactant, 3-glycidoxypropyltrimethoxysilane was consumed. The reaction solution was then analyzed by GC, but no peaks of the reactant, 3-glycidoxypropyltrimethoxysilane were detected. On NMR analysis of silicon, there were observed no signals of 3-glycidoxypropyltrimethoxysilane and instead, signals probably attributable to a target compound were observed. The completion of reaction was identified by these measurements. The solution was diluted with methanol to a concentration of 15% by weight of the active ingredient, obtaining a primer composition. This composition was a clear yellow solution which was quickly miscible with water and had pH 12.0 and a viscosity of 14.8 mPa-s. The base polymer portion had a degree of polymerization-of about 44 and the following average structural formula.

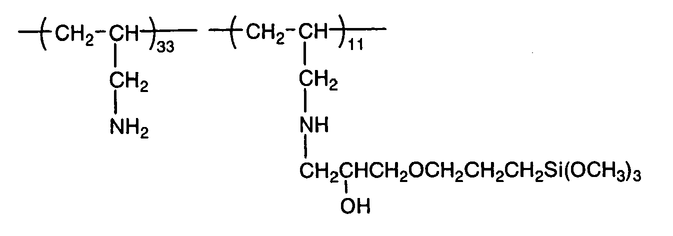

### Example 5

Solvent exchange was carried out on 500.0 parts of a 15 wt% aqueous solution of polyallylamine (Nitto Boseki Co., Ltd, PAA-01, Mw = 1000) by removing water under reduced pressure and adding methanol instead. It turned to a 15 wt% methanol solution. The solution, to which 81.2 parts (0.33 mole) of 2-(3,4-epoxycyclohexyl)ethyltrimethoxysilane was added, was stirred at 60-70°C for 5 hours. With the progress of reaction, the reactant, 2-(3,4-epoxycyclohexyl)ethyltrimethoxysilane was consumed. The reaction solution was then analyzed by GC, but no peaks of the reactant, 2-(3,4-epoxycyclohexyl)ethyltrimethoxysilane were detected. On NMR analysis of silicon, there were observed no signals of 2-(3,4-epoxycyclohexyl)ethyltrimethoxysilane and instead, signals probably attributable to a target compound were observed. The completion of reaction was identified by these measurements. The solution was diluted with methanol to a concentration of 15% by weight of the active ingredient, obtaining a primer composition. This composition was a clear yellow solution which was quickly miscible with water and had pH 11.5 and a viscosity of 3.5 mPa-s. The base polymer portion had a degree of polymerization of about 17 and the following average structural formula.

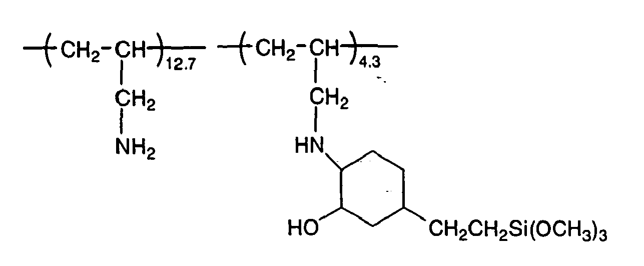

### Comparative Example 1

Water was removed from 500.0 parts of a 15 wt% aqueous solution of polyallylamine (Nitto Boseki Co., Ltd, PAA-15, Mw = 25,000, m+n > 360 in formula (3)) by vacuum distillation. The solution increased its viscosity as the amount of water decreased. Finally, the solution became quite difficult to handle, and water removal was no longer possible. Methanol was added to dissolve the solids, obtaining a mixed solution of 15 wt% methanol and water. 77.9 parts (0.33 mole) of 3-glycidoxypropyltrimethoxysilane was added to this solution whereupon the silane gelled. Synthesis could no longer continue.

### Comparative Example 2

Solvent exchange was carried out on 500.0 parts of a 15 wt% aqueous solution of polyallylamine (Nitto Boseki Co., Ltd, PAA-01, Mw = 1000) by removing water under reduced pressure and adding methanol instead. It turned to a 15 wt% methanol solution. The solution, to which 309.2 parts (1.31 moles) of 3-glycidoxypropyltrimethoxysilane was added, was stirred at 60-70°C for 5 hours. With the progress of reaction, the reactant, 3-glycidoxypropyltrimethoxysilane was consumed. The reaction solution was then analyzed by GC, but no peaks of the reactant, 3-glycidoxypropyltrimethoxysilane were detected. On NMR analysis of silicon, there were observed no signals of 3-glycidoxypropyltrimethoxysilane and instead, signals probably attributable to a target compound were observed. The completion of reaction was identified by these measurements. The solution was diluted with methanol to a concentration of 15 wt% of the active ingredient, obtaining a primer composition. It had pH 11.9 and a viscosity of 3.5 mPa-s. The base polymer portion had a degree of polymerization of about 17 and the following average structural formula. 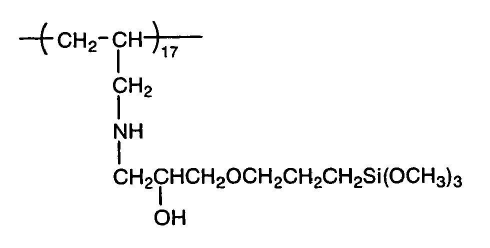 This solution, however, was less water soluble because it turned white turbid when mixed with water.

### Comparative Example 3

A primer composition was prepared by diluting 3-aminopropyltrimethoxysilane with methanol to a concentration of 15 wt%.

### Comparative Example 4

Solvent exchange was carried out on 500.0 parts (0.075 mole of polyallylamine with a molecular weight of 1,000) of a 15 wt% aqueous solution of polyallylamine (Nitto Boseki Co., Ltd, PAA-01, Mw = 1000) by removing water under reduced pressure and adding methanol instead. It turned to a 15 wt% methanol solution, which was used as a primer composition.

### [Preparation of polyurethane elastomer for adhesion test]

150 parts of polyoxytetramethylene glycol with a molecular weight of 1,000, 100 parts of 1,6-xylene glycol, 0.5 part of water, 200 parts of hexamethylene diisocyanate, and 800 parts of dimethylformamide were mixed by agitation, and heated at 90°C. The mixture was agitated at the temperature for a further 2 hours, allowing the reaction to run. The reaction was stopped by adding 3 parts of dibutyl amine. The excess of amine was neutralized with acetic anhydride, yielding a polyurethane elastomer.

### [Adhesion test of primer]

Each of the primer compositions obtained in Examples and Comparative Examples was brush coated to glass, steel and aluminum plates, and dried at 120°C for 5 minutes. The polyurethane elastomer was brush coated thereon and dried at 100°C for 10 minutes. The coating was subjected to a crosshatch adhesion test by scribing the coating in orthogonal directions at intervals of 1 mm to define 100 sections, attaching a pressure-sensitive adhesive tape to the coating, and stripping the tape. The number of stripped coating sections was counted, based on which the adhesion of primer to the urethane resin and the inorganic substrate was evaluated. For all the primer compositions of Examples, the number of stripped sections was zero, when applied to the three substrates. Superior adhesion performance was demonstrated.

### [Water solubility test of primer]

Each of the primer compositions obtained in Examples and Comparative Examples was held for about 10 hours in a 10 wt% aqueous solution form. Then the solution was visually observed for turbidity due to insoluble matter, precipitation, and layer separation. In terms of these factors combined, it was rated good (○), fair (Δ) or poor (×).

The results of the adhesion test and ambient conditions water solubility test on the compositions of Examples and Comparative Examples are shown in Table 1.

**Table 1**

| | Adhesion | | | Water solubility |
|---|---|---|---|---|
| | Glass plate | Steel plate | Aluminum plate | |
| Example 1 | 100/100 | 100/100 | 100/100 | ○ |
| Example 2 | 100/100 | 100/100 | 100/100 | ○ |
| Example 3 | 100/100 | 100/100 | 100/100 | ○ |
| Example 4 | 100/100 | 100/100 | 100/100 | ○ |
| Example 5 | 100/100 | 100/100 | 100/100 | ○ |
| Comparative Example 2 | 72/100 | 60/100 | 63/100 | Δ |
| Comparative Example 3 | 94/100 | 95/100 | 90/100 | ○ |
| Comparative Example 4 | 73/100 | 53/100 | 48/100 | ○ |

It is proven from the data of Examples and Comparative Examples that better results of adhesion are accomplished by the primer compositions embodying the invention.

In respect of numerical ranges disclosed herein it will of course be understood that in the normal way the technical criterion for the upper limit is different from the technical criterion for the lower limit, i.e. the upper and lower limits are intrinsically distinct proposals.

## Claims

1. A coating composition comprising
(a) silicon-containing polymer comprising recurring units according to formula (1): 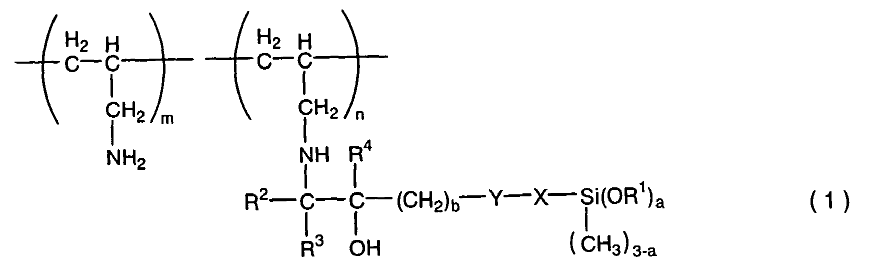 wherein m is from 10 to 260, n is from 1 to 100, R¹ are hydrogen, C₁-C₄ alkyl group or acetyl group, each of "a" and "b" is an integer from 1 to 3, X is a C₁-C₁₀ alkylene chain which may be substituted with C₁-C₆ alkyl group, Y is a direct single bond, oxygen atom or CHR⁵ group; each of R²_{'} R³, R⁴ and R⁵ is hydrogen or a C₁-C₆ alkyl group, provided that R³ or R⁴ may bond with R⁵ to form a saturated carbon ring;
(b) organic solvent and/or water, as solvent for said polymer.

2. A coating composition of claim 1 wherein m and n in formula (1) are numbers satisfying 0.003 ≤ n/(m+n) ≤ 0.9.

3. A coating composition of claim 1 or 2 wherein said polymer has a weight average molecular weight of from 300 to 3,000.

4. A method of preparing a coating composition comprising a water-soluble silicon-containing polymer comprising recurring units having the general formula (1) : 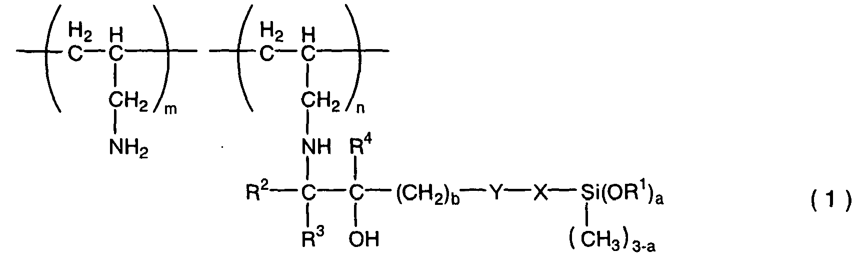 wherein m is a number from 10 to 260, n is a number from 1 to 100, R¹ is hydrogen, a C₁-C₄ alkyl group or acetyl group, and "a" and "b" each are an integer of 1 to 3, X is a C₁-C₁₀ alkylene chain which may be substituted with a C₁-C₆ alkyl group, Y is a single bond, oxygen atom or CHR⁵ group, R², R³, R⁴ and R⁵ each are hydrogen or a C₁-C₆ alkyl group, R³ or R⁴ may bond with R⁵ to form a saturated carbon ring, said polymer having a plurality of primary amino groups and a hydrolysable silyl or silanol group or both, and an alcohol or water or both,
said method comprising reacting a water-soluble primary amino group-containing polymer having the general formula (3): 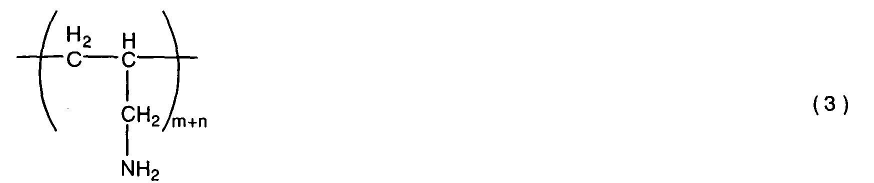 wherein m and n are as defined above, with an epoxy group-containing silicon compound having the general formula (2): 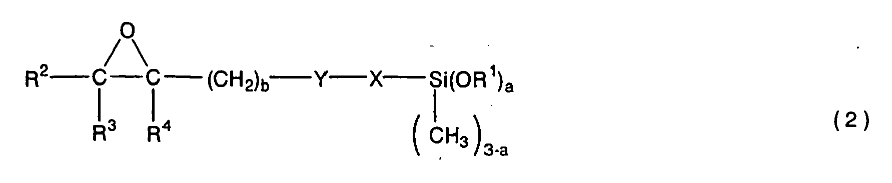 wherein R¹ to R⁴, a, b, X, and Y are as defined above, in an alcohol and/or water.

5. A method of claim 4 wherein m and n in formula (1) are numbers satisfying 0.003 ≤ n/(m+n) ≤ 0.9.

6. A method of claim 4 or 5 wherein the water soluble silicon-containing polymer has a weight average molecular weight of 300 to 3,000.

7. A method comprising treating an article or material substrate with a composition according to any one of claims 1 to 3.

8. The use of a composition according to any one of claims 1 to 3 for treating the surface of a glass fiber item or inorganic filler before forming a composite thereof with an organic resin.

9. An article or material.comprising a substrate coated or surface treated with a coating composition of claim 1, 2 or 3.

10. An article of claim 9 wherein the substrate is a glass fiber material selected from glass cloth, glass tape, glass mat and glass paper.

11. A material of claim 9 which is an inorganic filler.

12. An article or material of claim 9 wherein the substrate is of ceramic or metal.
